# EUROPEAN PATENT APPLICATION

(11) **EP 2 570 937 A1**
(43) Date of publication of application: **20.03.2013**
(21) Application number: 11780665.3
(22) Date of filing: 12.05.2011
(51) Int. Cl.: G06F 17/30

(54) **DATA SEARCH DEVICE, DATA SEARCH METHOD AND PROGRAM**

(30) Priority: 14.05.2010 JP 2010112433
(71) Applicant: NTT DoCoMo, Inc., Tokyo 100-6150 (JP)
(72) Inventor: MORIMATSU, Akane, Tokyo 100-6150 (JP); HASHIDA, Naoki, Tokyo 100-6150 (JP); SUZUKI, Kantaro, Tokyo 100-6150 (JP); YAMAMOTO, Misa, Tokyo 100-6150 (JP)
(74) Representative: HOFFMANN EITLE
(86) International application number: PCT/JP2011/060919
(87) International publication number: WO 2011/142408

(57) **Abstract**

[Object] To facilitate a weighted search based on information transmitted from a user, so that information that the user is likely to be seeking can be provided.

[Means to Achieve the Object] A data search device acquires memo data to be used in a search (S1), extracts keywords from the memo data (S4), and then allocates ranks to the keywords (S5). The data search device performs a search for the keywords in multiple databases to identify related data (S6). The databases are ranked similarly to the keywords. When multiple items of related data are identified, the data search device calculates overall ranks based on the ranks of the keywords and the ranks of the databases used in the search of the items of related data (S8), and outputs items of related data having higher ranks.

## Description

### Technical Field

The present invention relates to data searching.

### Background Art

Patent Document 1 discloses technology in which, when a user takes a picture of a station name plate using a mobile terminal, query information corresponding to an image shown in the picture is transmitted to a station information-providing server, and station-related information for the station of interest is transmitted from the station information-providing server.

### Prior Art Documents

### Patent Document

Patent Document 1: JP-A-2009-130697

### Disclosure of Invention

### Problems to be Solved by the Invention

In the technology disclosed in Patent Document 1, since the information to be searched for is restricted to information relating to a predetermined subject; namely, a "station," it is relatively easy to provide a search result sought by the user. However, when there is a wide range of subjects on which a search is performed or there is no particular restriction to the subjects on which a search is performed, it is often the case that an irrelevant search result that is not sought by the user is obtained.
Thus, the purpose of the present invention is to make it possible to perform a weighted search based on information transmitted from a user, such that a search result that the user is likely to be seeking is provided.

### Means of Solving the Problems

A data search device according to one embodiment of the present invention includes: a data acquisition unit that acquires input data containing one or multiple character strings; a keyword extraction unit that extracts, according to a prescribed rule, one or multiple keywords from the one or multiple character strings contained in the input data acquired by the data acquisition unit; a data identification unit that performs a search for the one or multiple keywords extracted by the keyword extraction unit in a database in which keywords and items of related data, which are items of data relating to the keyword(s), are stored in association with each other, and identifies an item(s) of related data associated with the one or multiple keywords; and a data output unit that outputs the item(s) of related data identified by the data identification unit as data corresponding to the input data.

In a preferred embodiment, the keyword extraction unit allocates a rank to each of the one or multiple character strings contained in the input data acquired by the data acquisition unit, and extracts a character string(s) with a higher rank as the keyword(s).
More preferably, the rank is determined in accordance with a mode of display or an input field of each character string.

In another preferred embodiment, there are multiple databases, a rank is allocated to each of the multiple databases, and the data identification unit identifies the item(s) of related data by giving a higher priority to a result of a search performed in a database having a higher rank.

In yet another preferred embodiment, there are multiple databases, a rank is allocated to each of the multiple databases, and the data identification unit identifies the item(s) of related data by combining the ranks of the databases and the ranks of the keywords.

In yet another preferred embodiment, the data acquisition unit acquires the input data transmitted from a terminal, together with additional data representing at least one of a transmission time, a position of the terminal and an attribute relating to the terminal, and the data identification unit identifies the item(s) of related data according to ranks determined based on the additional data.

In another aspect, the present invention provides a data search method including: acquiring input data containing one or multiple character strings; extracting, according to a prescribed rule, one or multiple keywords from the one or multiple character strings contained in the acquired input data; performing a search for the extracted one or multiple keywords in a database in which keywords and items of related data, which are items of data relating to the keywords, are stored in association with each other so as to be searchable, and identifying an item(s) of related data associated with the one or multiple keywords; and outputting the identified item(s) of related data as data corresponding to the input data.

In yet another aspect, the present invention provides a program for causing a computer to execute: a step of acquiring input data containing one or multiple character strings; a step of extracting, according to a prescribed rule, one or multiple keywords from the one or multiple character strings contained in the acquired input data; a step of performing a search for the extracted one or multiple keywords in a database in which keywords and items of related data, which are items of data relating to the keywords, are stored in association with each other so as to be searchable, and identifying an item(s) of related data associated with the one or multiple keywords; and a step of outputting the identified item(s) of related data as data corresponding to the input data.

### Effects of the Invention

According to the present invention, it is possible to perform a weighed search based on information transmitted from a user, such that information that the user is likely to be seeking is provided.

### Brief Description of the Drawings

FIG. 1 is a block diagram showing a configuration of a data search system.
FIG. 2 is a block diagram showing a configuration of a communication terminal.
FIG. 3 is a block diagram showing a configuration of a second server.
FIG. 4 is a functional block diagram showing a functional configuration of a control unit of a first server.
FIG. 5 is a functional block diagram showing a functional configuration of a control unit of a second server.
FIG. 6 is a diagram showing an example of a format of memo data.
FIG. 7 is a flowchart showing a process executed by the second server.
FIG. 8 is a diagram showing an example of display of related data transmitted to a communication terminal.
FIG. 9 is a diagram showing an example of databases whose ranks vary depending on gender.

### Description of Reference Symbols

10: data search system; 100: first server; 200: second server; 300: communication terminal; 210: control unit; 211: data acquisition unit; 212: keyword extraction unit; 213: data identification unit; 214: data output unit; 220: storage unit; 230: communication unit

### Mode for Carrying out the Invention

### [Exemplary Embodiment]

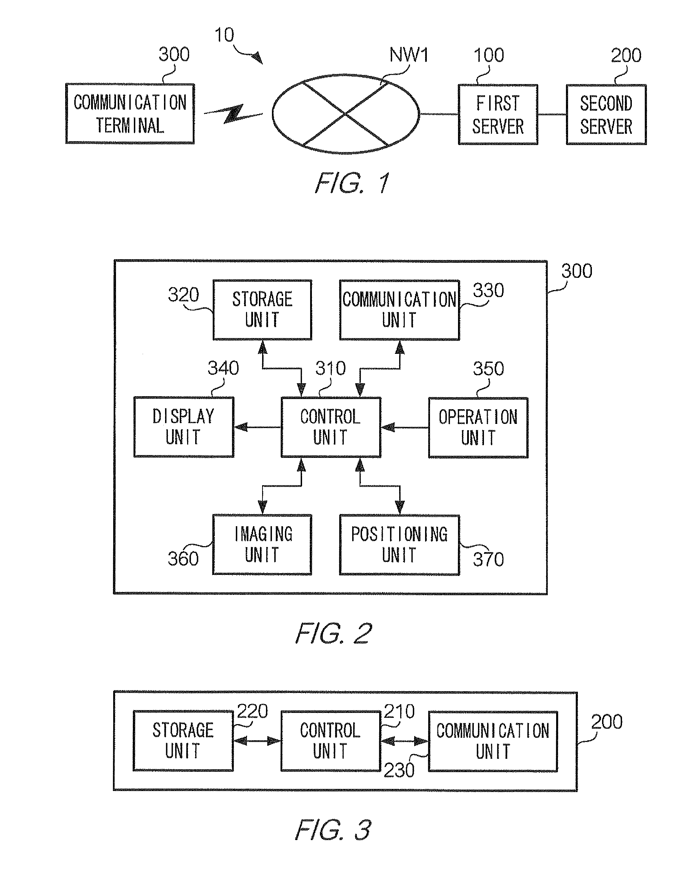

FIG. 1 is a block diagram showing a configuration of a data search system, which is one exemplary embodiment of the present invention. As shown in FIG. 1, data search system 10 of this exemplary embodiment includes first server 100, second server 200, and communication terminal 300, where the first server 100 and communication terminal 300 communicate with each other via network NW1. In this example, second server 200 has a function corresponding to a data search device of the present invention. Further, communication terminal 300 has a function corresponding to an external terminal of the present invention.

In data search system 10, first server 100 and second server 200 are used by a data search service provider. On the other hand, communication terminal 300 is used by a party using the data search service. In the following description, a party who uses communication terminal 300 will be referred to as a "user." Though not shown in the drawings, there may be multiple communication terminals 300 (and their users) in data search system 10.

In this exemplary embodiment, communication terminal 300 is a wireless communication terminal. In this case, network NW1 includes at least a mobile communication network. The mobile communication network here may be a wireless LAN (Local Area Network). Communication terminal 300 is a mobile phone or a smartphone, for example. It is to be noted, however, that an external terminal of the present invention is not limited to a wireless communication terminal, so long as it is capable of performing data communication, and may be a device such as a personal computer, connected to the Internet.

FIG. 2 is a block diagram showing a configuration of communication terminal 300. As shown in FIG. 2, communication terminal 300 includes control unit 310, storage unit 320, communication unit 330, display unit 340, operation unit 350, imaging unit 360, and positioning unit 370. Control unit 310 includes an arithmetic processing unit such as a CPU (Central Processing Unit) and a memory corresponding to a main storage device, and executes a program(s) to control various parts of communication terminal 300. Storage unit 320 includes a storage unit corresponding to an auxiliary storage device, such as a flash memory, and stores data used by control unit 310. The data stored in storage unit 320 include memo data generated by an operation performed by a user. Communication unit 330 includes an interface for communicating with network NW1, and transmits and receives data including memo data and related data. Display unit 340 includes a display medium such as a liquid crystal display and a drive unit therefor, and displays an image on a predetermined display surface. Operation unit 350 includes an input unit such as a keypad, which receives an operation performed by a user to notify the content of the operation to control unit 310. Imaging unit 360 captures an image of an object to generate image data. This image data is stored in storage unit 320 as a part of memo data. Positioning unit 370 measures a position of communication terminal 300, and generates position information representing the measured position. The positioning method executed by positioning unit 370 is, for example, a method using a GPS (Global Positioning System), though it may be another method (for example, a method by which a position of communication terminal 300 is inferred based on a position of a base station of a mobile communication network, with which communication terminal 300 is communicating).

First server 100 is a server device having a function of temporarily saving data received from communication terminal 300. Further, first server 100 has a function of utilizing the period during which the received data are saved to have second server 200 perform a search for additional data relating to the saved data.
In this exemplary embodiment, the data saved in first server 100 are referred to as "memo data." Memo data may be data of a character(s) and/or an image(s) input by a user of communication terminal 300. Memo data is an example of input data of the present invention.

Second server 200 is a server device having a function of searching for data to be added to memo data, and transmitting the same to first server 100. Second server 200 uses one or multiple databases to search for data relating to the memo data.
In this exemplary embodiment, the data searched for and transmitted by second server 200 are referred to as "related data." Related data are, for example, data described by HTML (Hyper Text Markup Language) or a markup language similar thereto, but may be any data containing information usable by a user, such as characters, an image, a link (hyperlink), sound, and so on.

FIG. 3 is a block diagram showing a configuration of second server 200. As shown in FIG. 3, second server 200 includes control unit 210, storage unit 220, and communication unit 230. Control unit 210 includes an arithmetic processing unit such as a CPU and a memory corresponding to a main storage device, and executes a program(s) to control various parts of second server 200. Storage unit 220 includes a storage unit such as a hard disk, and stores data used by control unit 210. Communication unit 230 includes an interface for communicating with first server 100, and transmits and receives data including memo data and related data.

It is to be noted that since the general overall configuration of first server 100 is the same as that of second server 200, a drawing showing the configuration is omitted. However, for convenience of explanation, the control unit, storage unit, and communication unit of first server 100 will be referred to as "control unit 110," "storage unit 120," and "communication unit 130," respectively. In first server 100, the content of data stored in storage unit 120 is different from that stored in second server 200, and first server 100 also differs from second server 200 in a point that first server 100 is connected to network NW1.

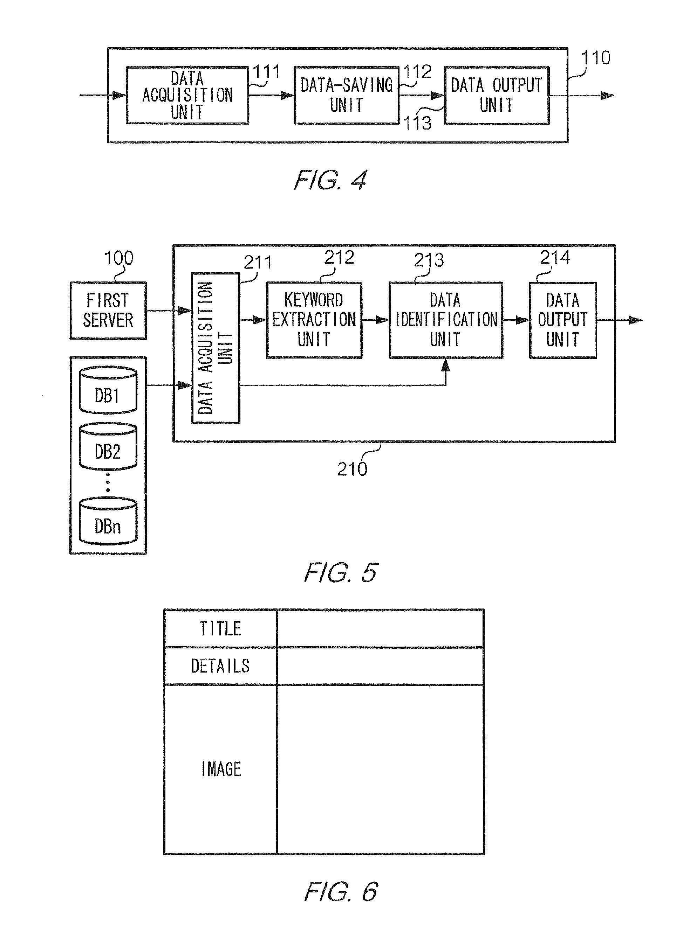

FIG. 4 is a functional block diagram showing a functional configuration of control unit 110 of first server 100. Control unit 110 executes a program(s) to achieve functions of data acquisition unit 111, data-saving unit 112, and data output unit 113 shown in FIG. 4. Data acquisition unit 111 acquires memo data transmitted from communication terminal 300, and acquires related data transmitted from second server 200. Data-saving unit 112 causes the memo data and the related data acquired by data acquisition unit 111 to be stored in storage unit 120. The storing performed by data-saving unit 112 not only serves the function of data search service but also serves the function of memo data backup. In this exemplary embodiment, data storage that serves both of these functions is referred to as "saving." Data output unit 113 outputs the memo data and the related data acquired by data acquisition unit 111 or saved by data-saving unit 112.

FIG. 5 is a functional block diagram showing a functional configuration of control unit 210 of second server 200. Control unit 210 executes a program(s) to achieve functions of data acquisition unit 211, keyword extraction unit 212, data identification unit 213, and data output unit 214. Data acquisition unit 211 acquires memo data transmitted from first server 100 and data contained in multiple databases DB1, DB2, ..., DBn. Keyword extraction unit 212 allocates ranks to character strings contained in memo data according to a prescribed rule, and extracts one or multiple keywords to be used in a search. Data identification unit 213 performs a search by using, in a search condition, the keyword(s) extracted by keyword extraction unit 212, and identifies related data matching the search condition. In identifying an item(s) of related data, data identification unit 213 uses the aforementioned databases DB1, DB2, ..., DBn. It is to be noted here that the value of n is an arbitrary integer greater than or equal to two. Databases DB1-DBn are each a collection of data in which keywords and items of related data are associated with each other. Databases DB1-DBn may be stored in storage unit 220, though they may be located outside second server 200. Further, second server 200 may use a combination of databases located inside and outside second server 200. Data output unit 214 outputs, as data corresponding to the memo data, the item(s) of related data identified by data identification unit 213.

It is to be noted that, in a case where databases DB1-DBn are located outside second server 200, namely, when they are in an external device, data identification unit 213 can identify item(s) of related data by transmitting the keyword(s) as a search query to the external device, and acquiring the item(s) of related data from the external device. Namely, in this case, data acquisition unit 211 does not have to read out and acquire all of the data contained in databases DB1-DBn, and it is sufficient to acquire item(s) of related data corresponding to the sought keyword(s).

Databases DB1-DBn are classified according to several criteria, and each of them is configured to contain keywords organized in accordance with a predetermined criterion. A criterion here may be, for example, a part of speech of a keyword (common noun, proper noun, etc.), meaning or content of a keyword, and so on. For example, databases DB1-DBn may include a database in which place names and public facility names are selectively collected, a database in which keywords relating to movies are selectively collected, a database in which keywords relating to restaurants are selectively collected, and so on. Further, databases DB1-DBn may be classified more finely, according to genres of movies, Italian cuisine, Chinese cuisine, and so on.

It is to be noted that an identical keyword may be contained in two or more of databases DB1-DBn. For example, a keyword "pasta" may be contained in each of a database of common nouns and a database of restaurants. Further, in a case where there is a keyword that is a title of a famous (or currently showing) movie, and at the same time is also a common noun, this keyword may be contained in each of the database of common nouns and a database of movies.

Further, databases DB1-DBn each have a pre-assigned rank. It is assumed in this exemplary embodiment that a rank having a smaller value is superior or assumes higher priority. However, it is to be noted that ranks relating to the present invention may be such that a rank having a larger value is superior, similarly to scores in games, for example. This applies to each of ranks of databases and ranks of character strings.

A rank of a database is determined by relative comparison with the other databases. Ranks of databases are, in essence, indicators showing which of the databases should be regarded with higher priority (or should be weighted) in a search. For example, it is sometimes preferable that a database in which proper nouns are collected be given a higher rank (or a rank having a smaller value) than that given to a database in which common nouns are collected. It is to be noted that which of the databases should be given higher priority may be determined appropriately by a data search service provider, and the ranks do not have to be fixed and may be varied depending on regions, seasons, or the like. Further, ranks of databases may vary in accordance with a current trend in society or the like. For example, a rank of a database containing, as a keyword, a word or phrase frequently appearing in predetermined web sites such as blogs or search engines, or a rank of a database containing a vogue word may be raised temporarily by a data search service provider.

The foregoing is a description of the configuration of data search system 10. In this configuration, a user creates memo data by using communication terminal 300. Memo data created by a user may include data describing an idea that comes to the user during use of communication terminal 300, a schedule of the user, and so on. In addition to inputting characters by using operation unit 350 of communication terminal 300, a user may take a picture of an object (a poster of a movie, a signboard of a store, a product package, a train timetable, etc.) as a reminder of an appearance of the object.

When memo data are created by a user, communication terminal 300 stores the memo data in storage unit 320. Further, communication terminal 300 transmits the memo data to first server 100 at an appropriate timing, to backup the memo data. The timing at which memo data are to be backed up may be a timing at which a user requests backup or may be a regularly repeated timing unrelated to an operation performed by a user.

First server 100 and second server 200 utilize the state where memo data are saved, and cooperatively perform an operation for adding related data to the saved memo data. First server 100 transmits memo data received from communication terminal 300 to second server 200, and in response thereto, second server 200 transmits related data relating to the memo data to first server 100. If it is possible to determine to which item of memo data the transmitted related data correspond, it is sufficient to transmit only the related data to first server 100, and it is unnecessary to transmit the memo data. For example, in a case where each item of memo data is assigned a unique ID, it is sufficient that second server 200 transmit the related data and the ID to first server 100.

When the related data have been sought and transmitted by second server 200, first server 100 saves these related data, and transmits the same to communication terminal 300 at an appropriate timing. First server 100 may transmit the related data at a timing requested by the user of communication terminal 300, though it may transmit the related data immediately after reception thereof, instead of responding to the user's request.

It is to be noted that the search for related data does not have to be performed for every item of memo data. For example, an item of memo data, from which no meaningful character string that would be worth searching can be extracted, is excluded from items of memo data for which a search is performed. Such an item of memo data does not have to be transmitted from first server 100 to second server 200, and moreover, does not have to be transmitted from communication terminal 300 to first server 100.
Further, first server 100 may store character strings contained in an item(s) of memo data excluded from items of memo data for which a search is performed, such that, when such a character string is extracted a number of times greater than or equal to a predetermined number of times, the character string is recognized as a new word. Such a new word may be notified from first server 100 to the data search service provider, so as to be newly added to any one of the databases.

FIG. 6 is a diagram showing an example of a format of memo data. In this example, an item of memo data has three input fields; namely, "title," "details," and "image." "Title" is an input field in which a character string corresponding to a title or heading of the memo data input by a user is inserted. The font size, color, and/or font family of this character string may be variable. Further, "image" is an input field to which image data generated by imaging unit 360 is attached. It is to be noted that an item of memo data does not have to have attached image data. Further, "details" is an input field in which a character string extracted from image data by second server 200 is inserted. Thus, the input field "details" is in a state where no character string is inserted (a blank state) until the memo data is sent back from first server 100. However, it is not prohibited for a user to input data in the input field "details," and a user may input any character string or the like, as necessary.

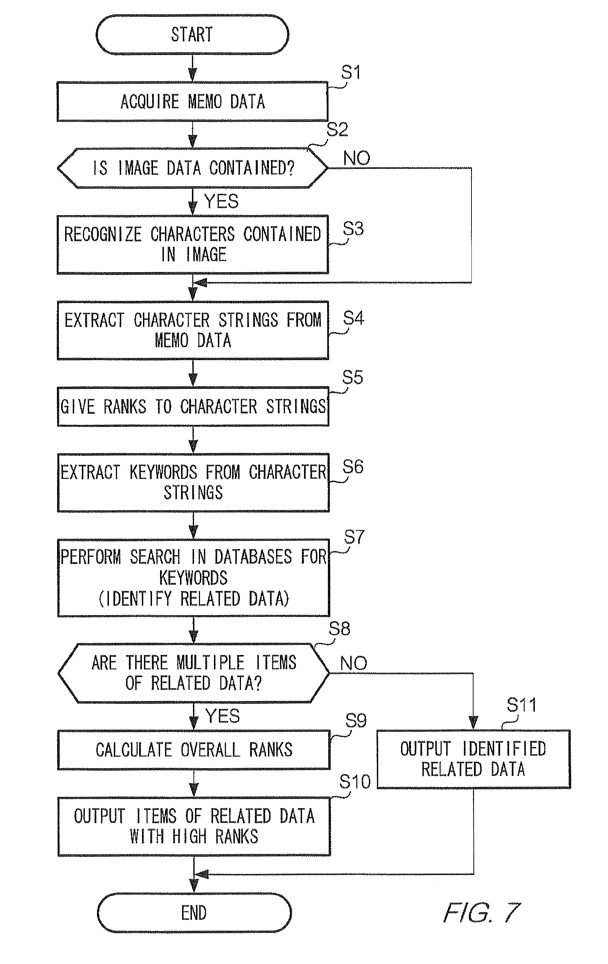

FIG. 7 is a flowchart showing a process executed by second server 200 when searching for related data. As shown in FIG. 7, control unit 210 of second server 200 first acquires memo data via communication unit 230 (step S1). After acquisition of memo data, control unit 210 determines whether the memo data contain image data (step S2).

If the memo data contain image data, control unit 210 analyses the image represented by the image data, and recognizes characters contained in the image (step S3). The process of step S3 is performed by using a known OCR (Optical Character Recognition) technique. At this time, if the recognized characters are those of a foreign language, control unit 210 may perform translation, as necessary. It is to be noted that, in a case where the recognized characters contain a character having a size and/or color different from that of the other characters, control unit 210 may store the difference in association with the character, and may store the display position of the character in association with the character.
On the other hand, if the memo data do not contain image data, control unit 210 skips the process of step S3.

Next, control unit 210 extracts character strings from the memo data (step S4). According to this process, control unit 210 performs a known morphological analysis on the characters input by a user ("title" in FIG. 6) and the characters recognized in step S3, to recognize characters as various units each forming a morpheme (e.g., a part of speech). Then, control unit 210 extracts character strings each formed by appropriately combining contiguous morphemes in a sentence. It is to be noted that a character string here may include any item that can be represented by a character code, and may include not only a so-called character but also a number or a symbol.

After extracting character strings, control unit 210 allocates a rank to each of the extracted character strings (step S5). A rank of a character string is determined as a result of comparison with the other character strings. The other character strings here may be limited to the character strings contained in an item of memo data for use in a search, though they may include various character strings that are assumable, irrespective of whether they are contained in the memo data. Ranks of character strings are, in essence, indicators indicating which of the character strings should be regarded with higher priority in a search.

In a case where the characters contained in the character strings extracted from the memo data include information relating to a mode of display, such as a size, a color, a font family, a display position, etc., control unit 210 may reflect the information relating to the mode of display on the ranking. For example, it can be assumed that a character having a larger size than the other characters in an item of memo data has more significant meaning in this item of memo data. Further, in a case where a particular character string in an item of memo data is underlined or is expressed in a color different from the color of the other character strings, it can be assumed that there is a high possibility that the character string is emphasized in a sentence. Thus, in a case where such a character string is extracted, control unit 210 sets a higher rank to the character string than the ranks of the other character strings.

Further, control unit 210 may perform ranking of character strings in cooperation with an external information source such as a search engine, etc. For example, it can be said that there is a high possibility that a character string searched for frequently by a search engine indicates an item that is in vogue or attracting public attention. Therefore, in a case where such a character string is extracted, control unit 210 may raise the rank of the character string to be higher than those of the other character strings.

Furthermore, control unit 210 may perform ranking based on which input field a character string extracted from memo data belongs to. In the example of FIG. 6, control unit 210 may set a higher rank to a character string written in "title," or may set a higher rank to a character string recognized from an image.

It is to be noted that control unit 210 may calculate an overall rank by combining ranks based on multiple points of view. For example, it is possible that control unit 210 performs ranking multiple times according to the multiple methods exemplarily described in the foregoing, and thereafter, combines the ranks assigned to each character string, which have been obtained according to the multiple methods, by performing a predetermined operation (addition, multiplication, etc.), such that the value calculated by this operation is used as a rank.

After ranking of character strings has finished, control unit 210 extracts one or multiple keywords from multiple character strings (step S6). At this time, control unit 210 refers to the ranks given to the character strings, and extracts, as a keyword(s), one or multiple character strings with a higher rank(s). Then, control unit 210 performs a search for the keyword(s) thus extracted from the memo data in multiple databases, and identifies an item(s) of related data associated with the keyword(s) (step S7). If an item(s) of related data could be identified, control unit 210 further identifies the rank of the database(s) in which the item(s) of related data is (are) stored.

It is to be noted that in step S7, control unit 210 may take into consideration so-called "variations of expression." Variations of expression here indicate possible use of different expressions for a word or phrase having the same meaning (e.g., a synonym or an abbreviation for a word or phrase). Namely, in comparison of a keyword extracted from memo data with a keyword contained in a database, control unit 210 may determine that they match each other not only when they are identical, but also when one of them is a synonym of the other.

At this point, control unit 210 determines whether there are multiple items of related data identified in step S7 (step S8), and depending on the result of determination, performs different operations thereafter. In a case where there is a single item of related data identified in step S7, control unit 210 causes the item of related data to be output and transmitted to first server 100 via communication unit 230 (step S 11). On the other hand, in a case where there are multiple items of related data identified in step S7, control unit 210 calculates overall ranks by combining the ranks of databases in which the items of related data are stored and the ranks of keywords associated with the items of related data (step S9), and outputs only a predetermined number of items of related data having higher overall ranks (step S10). Combining here includes, as a simple example, adding or multiplying a rank of a database and a rank of a keyword. Alternatively, combining of these ranks may include weighting respective ranks by multiplying them using different predetermined coefficients, and adding or multiplying the weighted values. It is to be noted that in a case where a keyword(s) is extracted from image data contained in memo data, control unit 210 outputs the data of the keyword(s) contained in the image data, together with the related data.

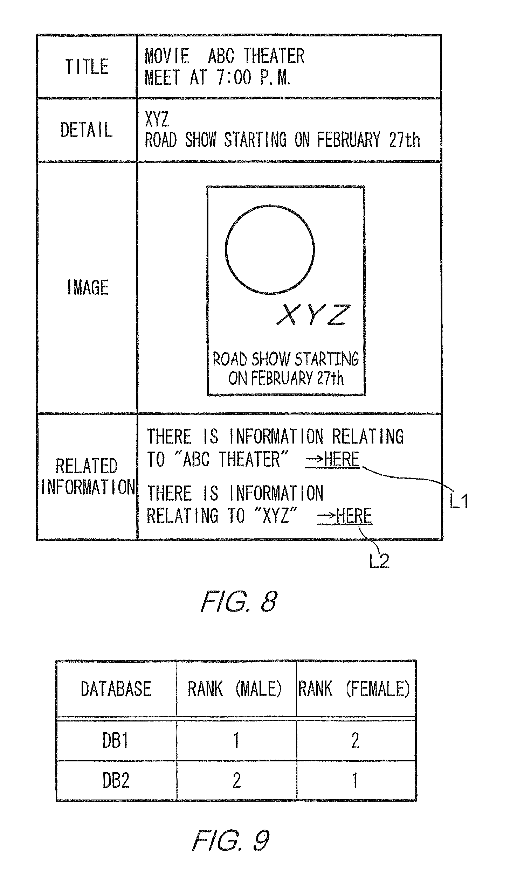

FIG. 8 is a diagram showing an example of display of related data transmitted to communication terminal 300. In FIG. 8, a character string "MOVIE ABC THEATER MEET AT 7:00 P.M." has been inputted in the input field "title" of memo data. It is assumed here that "ABC THEATER" is a name of a movie theater. Further, image data corresponds to a poster of a movie, and contains a character string "XYZ," which is the title of the movie, and a character string "ROAD SHOW STARTING ON FEBRUARY 27TH."

In this example, in the input field "details" of the memo data are added to the character strings recognized in the image data. Further, in a search for related data, the movie theater name "ABC THEATER" and the movie's title "XYZ" are regarded with higher priority than the other character strings such as "MOVIE," "7:00 P.M." "MEET AT," "FEBRUARY," "27TH," and "ROAD SHOW." As a result, items of information obtained as related data are items of information relating to "ABC THEATER" and "XYZ." Communication terminal 300 causes display unit 340 to display links L1 and L2 to enable reference to these items of information. Items of information that can be obtained as a result of selection of links L1 and L2 are, for example, official websites of "ABC THEATER" and "XYZ" or a webpage showing a result of a search for "ABC THEATER" or "XYZ" performed by a predetermined search engine. It is to be noted that an order of display of links L1 and L2 follows the overall ranks calculated in the aforementioned step S9. Further, communication terminal 300 may vary a display size and/or an amount of displayed information of the respective items of related data in accordance with rank. For example, communication terminal 300 may change a mode of display depending on a rank, such that an item of related data having a higher rank is displayed in larger characters, for example. Further, explanations of links L1 and L2 may change in accordance with the content of information. For example, in the example of FIG. 8, each of the explanations of links L1 and L2 includes a character string "THERE IS INFORMATION RELATING TO (KEYWORD)." However, if link L1 is a link to a map around "ABC THEATER," the explanation may be "YOU CAN REFER TO MAP AROUND ABC THEATER," and if link L2 is a link to a schedule of showing of "XYZ," the explanation may be "YOU CAN REFER TO SCHEDULE OF SHOWING OF XYZ."

As is described in the foregoing, in data search system 10 of this exemplary embodiment, it is possible, without an explicit request by a user for a search, to utilize backup of memo data to perform a search for related data, thereby to add the related data to the memo data. Further, in data search system 10, it is also possible to use a character string(s) contained in image data in a search, and to reflect a result of recognition of the character string(s) on the memo data.

Furthermore, in data search system 10, it is possible to perform a weighted search using ranks set to character strings or ranks set to databases or combination thereof. As a result, a search in which more conspicuous character strings among the character strings contained in the memo data are regarded with higher priority or a search in which databases having higher relevance to the character strings contained in the memo data are regarded with higher priority are likely to be performed, and thus, there is a higher possibility that the information a user is seeking can be provided.

### [Modifications]

The exemplary embodiment described in the foregoing is a mere example for carrying out the present invention. The present invention may be carried out by applying the following modifications to the above-described exemplary embodiment. It is to be noted that the following modifications may be used in any appropriate combination, as necessary.

### (Modification 1)

When transmitting memo data to first server 100, communication terminal 300 may transmit, together with the memo data, additional data regarding the memo data. The additional data here represent at least one of the transmission time of the data (date, time, etc.), the position of communication terminal 300, and an attribute regarding communication terminal 300. Such data correspond to an example of additional data in the present invention. The position of communication terminal 300 can be represented by position information generated by positioning unit 370. Further, the attribute regarding communication terminal 300 includes not only an attribute of communication terminal 300 itself, but also an attribute of the user of communication terminal 300 (sex, age, occupation, hobby, etc.). In the case of the latter, communication terminal 300 pre-stores an attribute of the user.

When communication terminal 300 transmits such additional data, second server 200 receives the additional data, and identifies related data based on the ranks of character strings or databases, where the ranks are determined according to the content of the received additional data. For example, second server 200 performs a search for related data by use of a database in which items of information are collected for each region, or databases whose priority order varies depending on sex, age, or the like. Further, in a case where the memo data contains a character string closely related to the position represented by the position information or the transmission time, second server 200 may raise the rank of this character string. For example, in a case where the transmission time of memo data is summer and the memo data contains a character string related to summer (such as "summer vacation or "sea bathing"), second server allocates ranks to the character strings such that the rank of such a character string is raised.

FIG. 9 is a diagram showing an example of databases whose ranks vary depending on gender. In the example of FIG. 9, database DB1 is a database whose rank is high for male, and low for female. On the other hand, database DB2 is a database whose rank is high for female, and low for male. Namely, in this example, database DB1 is a database in which items of mainly male-oriented information are collected, while database DB2 is a database in which items of mainly female-oriented information are collected. In this case, if the user of communication terminal 300 transmitting memo data is female, second server 200 uses database DB2 with a higher priority in performing a search relating to the memo data.

### (Modification 2)

Data search system 10 described above is configured to include different servers; namely, first server 100 and second server 200. However, a server device of the present invention may have the functions of first server 100 and second server 200 in a single device. Further, some functions provided to second server 200 in the exemplary embodiment described in the foregoing may be achieved as functions of first server 100. For example, the function of recognizing character strings contained in an image (steps S2-S4) or the function of ranking the character strings (step S5) may be executed in advance by server 100, before the memo data is transmitted to second server 200. In other words, it can be said that these functions are not indispensable to a data search device of the present invention. It is to be noted that the process of steps S2-S5 may be executed in communication terminal 300 instead of in first server 100 or in second server 200.

### (Modification 3)

The present invention does not necessarily require that ranks be allocated to both a group of character strings and a group of databases, and may be carried out if at least one of the groups is allocated ranks. In the present invention, in a case where either of a group of character strings or a group of databases is not allocated ranks, it is not necessary to use multiple members included in one of the groups that is not allocated ranks. For example, in the present invention, in a case where multiple ranked databases are used in a search, the number of character strings (keywords) extracted from memo data may be only one. Similarly, in the present invention, in a case where multiple ranked keywords are used in a search, the number of databases may be only one.

Further, in the present invention, in a case where multiple databases are used, it is sufficient that the multiple databases are logically distinguished from each other, and it is unnecessary that these databases are configured to be separate from each other physically. Therefore, it is not necessary that these databases are stored in respective storage units, and they may be stored in the same storage unit as independent collections of data.

Further, the ranks of character strings or databases may be such that a same rank is allocated to different character strings or databases. For example, in a case where three character strings are extracted from memo data, the ranks of these character strings may be such that the rank of a particular one of them is high and the ranks of the other two are the same.

### (Modification 4)

The present invention does not have to be carried out by using backup of memo data. Namely, similarly to a general data search, the present invention may be carried out such that when a user of an external terminal requests a search, a search for related data is performed in response to this request.

### (Modification 5)

The present invention may be not only a data search device, a server device or a data search system including the data search device, but also a method for achieving them or a program for causing a computer to execute the functions shown in FIG. 5. Such a program may be provided in a form of a storage medium such as an optical disk storing the program therein or may be provided so as to be downloaded to a computer via a network such as the Internet, so as to be installed in the computer.

## Claims

1. A data search device comprising:
a data acquisition unit that acquires input data containing one or multiple character strings;
a keyword extraction unit that extracts, according to a prescribed rule, one or multiple keywords from the one or multiple character strings contained in the input data acquired by the data acquisition unit;
a data identification unit that performs a search for the one or multiple keywords extracted by the keyword extraction unit in a database in which keywords and items of related data, which are items of data relating to the keywords, are stored in association with each other, and identifies an item(s) of related data associated with the one or multiple keywords; and
a data output unit that outputs the item(s) of related data identified by the data identification unit as data corresponding to the input data.

2. The data search device according to Claim 1, wherein the keyword extraction unit allocates a rank to each of the one or multiple character strings contained in the input data acquired by the data acquisition unit, and extracts a character string(s) having a higher rank as the keyword(s).

3. The data search device according to Claim 2, wherein a rank is determined in accordance with a mode of display or an input field of each character string.

4. The data search device according to Claim 1, wherein
there are multiple databases,
a rank is allocated to each of the multiple databases, and
the data identification unit identifies the item(s) of related data by giving a higher priority to a result of a search performed in a database with a higher rank.

5. The data search device according to Claim 2, wherein
there are multiple databases,
a rank is allocated to each of the multiple databases, and
the data identification unit identifies the item(s) of related data by combining the ranks of the databases and the ranks of the keywords.

6. The data search device according to Claim 1, wherein
the data acquisition unit acquires the input data transmitted from a terminal, together with additional data representing at least one of a transmission time, a position of the terminal and an attribute relating to the terminal, and
the data identification unit identifies the item(s) of related data according to ranks determined based on the additional data.

7. A data search method comprising:
acquiring input data containing one or multiple character strings;
extracting, according to a prescribed rule, one or multiple keywords from the one or multiple character strings contained in the acquired input data;
performing a search for the extracted one or multiple keywords in a database in which keywords and items of related data, which are items of data relating to the keywords, are stored in association with each other so as to be searchable, and identifying an item(s) of related data associated with the one or multiple keywords; and
outputting the identified item(s) of related data as data corresponding to the input data.

8. A program for causing a computer to execute:
a step of acquiring input data containing one or multiple character strings;
a step of extracting, according to a prescribed rule, one or multiple keywords from the one or multiple character strings contained in the acquired input data;
a step of performing a search for the extracted one or multiple keywords in a database in which keywords and items of related data, which are items of data relating to the keywords, are stored in association with each other so as to be searchable, and identifying an item(s) of related data associated with the one or multiple keywords; and
a step of outputting the identified item(s) of related data as data corresponding to the input data.
